# EUROPÄISCHE PATENTSCHRIFT

(11) **EP 3 277 544 B1**
(45) Veröffentlichungstag und Bekanntmachung des Hinweises auf die Patenterteilung: **13.02.2019**
(21) Anmeldenummer: 16712865.1
(22) Anmeldetag: 30.03.2016
(51) Int. Cl.: B60R 21/213

(54) **BEFESTIGUNGSANORDNUNG ZUR BEFESTIGUNG EINES AIRBAGS AN EINER KAROSSERIESEITIGEN TRÄGERWAND EINES FAHRZEUGS**
SECURING ARRANGEMENT FOR SECURING AN AIRBAG TO A CHASSIS-SIDE SUPPORT WALL OF A VEHICLE
ENSEMBLE DE FIXATION SERVANT À FIXER UN COUSSIN GONFLABLE DE SÉCURITÉ SUR UNE PAROI DE SUPPORT, SITUÉE DU CÔTÉ DE LA CARROSSERIE, D'UN VÉHICULE

(30) Priorität: 30.03.2015 DE 102015205734; 19.05.2015 DE 102015209111
(43) Veröffentlichungstag der Anmeldung: 07.02.2018
(73) Patentinhaber: Volkswagen Aktiengesellschaft, 38440 Wolfsburg (DE)
(72) Erfinder: FRIESE, Oliver, 38527 Wedesbüttel (DE)
(86) Internationale Anmeldenummer: PCT/EP2016/056837
(87) Internationale Veröffentlichungsnummer: WO 2016/156342

(56) Entgegenhaltungen:
- DE-A1-102006 061 620
- DE-A1-102007 008 649
- DE-A1-102013 217 064

## Beschreibung

Die Erfindung betrifft eine Befestigungsanordnung zur Befestigung eines Airbags an einer karosserieseitigen Trägerwand eines Fahrzeugs nach dem Oberbegriff des Patentanspruches 1.

In gängiger Praxis kann sich ein Kopfairbag von der A-Säule bis über die B-Säule entlang eines Dachholms des Fahrzeugs erstrecken. Der Kopfairbag kann dabei ziehharmonikaartig gefaltet und/oder in Rollfaltung sichtgeschützt hinter dem Dachhimmel verstaut sein. Der Kopfairbag kann mit einer als Gewebelage ausgebildeten Befestigungslasche mittels Befestigungsclips an der karosserieseitigen Dachholm-Trägerwand befestigt sein. Bei aktiviertem Kopfairbagmodul entfaltet sich der Kopfairbag nach Art eines Vorhanges, um den Fahrzeuginsassen von der, den Fahrzeuginnenraum begrenzenden Seitenstruktur des Fahrzeuges abzuschirmen.

Aus der DE 20 2004 014 219 U1 ist eine Befestigungsanordnung zur Befestigung eines solchen Airbags an einer karosserieseitigen Trägerwand bekannt. Diese weist zumindest ein Befestigungselement (das heißt Befestigungsclip) mit einem Kopfteil und einem Schaftteil auf. Im Montagezustand wird die Befestigungslasche des Airbags sowie eine Montageöffnung der Trägerwand vom Schaftteil durchsetzt, das einen Öffnungsrandbereich der Trägerwand-Montageöffnung hintergreift.

Das Befestigungselement kann ein Blechumformteil sein, dessen Zuschnitt- oder Randkanten bei der Montage sowie bei der crashbedingten Entfaltung des Airbags Störkonturen für den Werker oder für das sich entfaltende Airbaggewebe bilden. Als Maßnahme zum Schutz vor solchen Störkonturen ist in der DE 20 2004 014 219 U1 im Montagezustand das Kopfteil des Befestigungselementes von der Airbagwicklung überdeckt. Hierzu ist in einer äußeren Hülle des Airbagmoduls ein Schlitz bereitgestellt, durch den Anschlagplatten des Befestigungselement-Kopfteils eingehängt werden können. Entsprechend ist das Kopfteil vollständig durch den Airbag überdeckt. Bei der Montage wird die Airbagwicklung unter Zwischenlage des darin eingehängten Befestigungselements gegen die Trägerwand-Montageöffnung gedrückt und das Schaftteil damit verrastet.

Die Airbag-Anordnung unmittelbar in Überdeckung mit dem Befestigungselement-Kopfteil kann je nach geometrischen Gegebenheiten zu einer bauraumungünstigen Airbag-Position führen.

Aus der DE 10 2007 008 649 A1 ist ein gattungsgemäßer Airbag bekannt. Aus der DE 10 2006 061 620 A1 ist eine Trägerwand mit einer Montageöffnung zum Halten eines Airbagmoduls bekannt. Aus der DE 10 2013 217 064 A1 ist eine Anordnung eines Befestigungselementes an einer Befestigungslasche eines Airbags bekannt.

Die Aufgabe der Erfindung besteht darin, eine Befestigungsanordnung zur Befestigung eines Airbags bereitzustellen, bei der in einfacher Weise das eine Störkontur bildende Befestigungselement-Kopfteil einen Montagevorgang nicht beeinträchtigt.

Die Aufgabe ist durch die Merkmale des Patentanspruches 1 gelöst. Bevorzugte Weiterbildungen der Erfindung sind in den abhängigen Ansprüchen offenbart.

Erfindungsgemäß wird darauf verzichtet, dass die gesamte Airbagwicklung das Befestigungselement-Kopfteil im Montagezustand überdeckt. Vielmehr wird gemäß dem Patentanspruch 1 die Befestigungslasche des Airbags mit einem zumindest zweilagigen Mehrlagenaufbau ausgebildet, der zumindest eine Befestigungslage und zumindest eine Schutzlage aufweist. Die Befestigungslage ist im Montagezustand von dem an der karosserieseitigen Trägerwand montierten Befestigungselement-Schaftteil durchsetzt. Demgegenüber ist die Schutzlage nicht von dem Befestigungselement-Schaftteil durchsetzt, sondern überdeckt die Schutzlage das Befestigungselement-Kopfteil. Dadurch ist ein unmittelbarer Kontakt mit dem Werker bei der Montage sowie mit dem sich entfaltenden Airbaggewebe im Crashfall vermieden.

Zur Erhöhung der Funktionalität kann die das Befestigungselement-Kopfteil überdeckende Schutzlage zusätzlich mit einer Zugriffsöffnung ausgebildet sein, die einen direkten Werkzeugzugriff auf das Kopfteil ermöglicht, um eine einfache Demontage des Befestigungselementes zu ermöglichen. Die in der Schutzlage ausgebildete Zugriffsöffnung ist dabei montagetechnisch günstig in Flucht mit einer Werkzeugzugangsöffnung am Befestigungselement-Kopfteil ausgerichtet, um eine einfache Demontage des Befestigungselementes zu erzielen.

Der Airbag kann zusammen mit seiner Befestigungslasche in einem herkömmlichen Nähverfahren hergestellt werden, bei dem obere und untere Airbaggewebelagen zunächst separat hergestellt und anschließend unter Bildung von Hohlkammern miteinander vernäht werden. Die erfindungsgemäße Airbaggeometrie ist alternativ dazu auch in einem sogenannten Einstückwebverfahren (OPW - one piece woven) herstellbar, bei dem eine aus Kettfäden und Schussfäden gebildete Gewebestruktur erzeugt wird, deren obere Airbaggewebelage und untere Airbaggewebelage in einem gemeinsamen Webvorgang hergestellt werden, und zwar unter Bildung zwischengeordneter Hohlkammern. Der Schussfaden wird dabei alternierend in der oberen Airbaggewebelage und in der unteren Airbaggewebelage verwebt. Entsprechend ist die Fadendichte in der oberen Gewebelage und in der unteren Gewebelage - im Vergleich zu einer Einzelgewebelage - halbiert, was gegebenenfalls die Gewebefestigkeit beeinflussen kann.

Bei der Herstellung im oben spezifizierten Einstückwebverfahren ist die, zumindest eine Doppellagenstruktur aufweisende Befestigungslasche ein materialeinheitlicher und/oder einstückiger Bestandteil der Airbagwicklung, was in einer vorteilhaften Bauteilreduzierung resultiert.

Im Hinblick auf einen zuverlässigen Schutz vor Beschädigungen des Airbaggewebes vor scharfen Kanten des Befestigungselement-Kopfteils ist die Schutzlage an ihrer, der Airbagwicklung zugewandten Randseite an der Befestigungslage fest angebunden. Demgegenüber liegt die Schutzlage an ihrer, der Airbagwicklung abgewandten Randseite anbindungsfrei auf der Befestigungslage auf.

Eine technische Umsetzung betrifft die Querseiten der Schutzlage, die die beiden oben definierten Schutzlagen-Randseiten miteinander verbinden. Diese Schutzlagen-Querseiten sind unter Bildung einer taschenförmigen Kopfteil-Aufnahmekammer fest auf der Befestigungslasche angebunden. Die taschenförmige Kopfteil-Aufnahme ist an ihrer, von der Airbagwicklung abgewandten Randseite offen gestaltet, damit das Befestigungselement betriebssicher in die Kopfteil-Aufnahmekammer einsetzbar ist. Die oben definierte taschenförmige Aufnahmekammer ist somit dreiseitig geschlossen und nur an einer Randseite offen.

Wie oben angedeutet, besteht bei der OPW-Herstellung der zumindest zweilagigen Befestigungslasche die Problematik, dass die Befestigungslage und die Schutzlage im Vergleich zu einer Einzelgewebelage lediglich eine halbierte Fadendichte aufweisen. Dies kann zu einer Beeinträchtigung der Anbindung des Airbags an der Trägerwand führen. Vor diesem Hintergrund kann zur Verstärkung der Anbindung eine zusätzliche Verstärkungslage vorgesehen sein. Im Montagezustand ist die Verstärkungslage zusammen mit der Befestigungslage zwischen der Trägerwand und Befestigungselement-Kopfteil angeordnet. Dabei wird sowohl die Befestigungslage als auch die Verstärkungslage im Befestigungselement-Schaftteil durchsetzt.

Im Hinblick auf eine einfache Herstellbarkeit des Airbags sowie einer Bauteilreduzierung ist es bevorzugt, wenn die oben erwähnte Verstärkungslage und die Befestigungslage materialeinheitlich und/oder einstückig zum Beispiel an einer Faltkante ineinander übergehen. Im Montagezustand können in diesem Fall die Befestigungslage und die Verstärkungslage um die Faltkante um 180° auf Umschlag in flächiger Anlage übereinander zusammengefaltet sein. Beide Lagen weisen dabei Durchführungsöffnungen auf, die vom Befestigungselement-Schaftteil durchsetzt sind.

In der obigen Ausführungsform ist somit die Befestigungslasche des Airbags dreilagig ausgeführt, und zwar mit der Befestigungslage sowie der Verstärkungslage und der Schutzlage. Die Verstärkungslage ist dabei im oben definierten OPW-Verfahren - im Unterschied zur Befestigungslage und zur Schutzlage - nicht nur mit halber Fadendichte, sondern mit voller Fadendichte, das heißt als eine Einzelgewebelage herstellbar. Insgesamt weist somit die (durch Befestigungslage und Verstärkungslage gebildete) Doppellagenstruktur eine Fadendichte auf, die um das 1,5-fache größer als eine im OPW-Verfahren hergestellte Einzelgewebelage, wodurch die Airbag-Anbindung an der Trägerwand vorteilhaft verstärkt ist.

In dem oben angedeuteten OPW-Verfahren wird jeder zweite Faden gewechselt, woraus die oben angesprochene Halbierung der Fadendichte resultiert. In Abkehr davon kann es technisch von Vorteil sein, auch nur jeden dritten Faden zu wechseln. Damit wird einerseits eine Gewebelage mit einer 2/3-Fadendichte und andererseits eine Gewebelage mit einer 1/3-Fadendichte erzeugt. Damit verbunden ist eine höherer Festigkeit der 1/3-Fadendichte gegenüber der ½-fachen Fadendichte.

Die vorstehend erläuterten und/oder in den Unteransprüchen wiedergegeben, vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile sind nachfolgend anhand von Zeichnungen näher erläutert.

Es zeigen:
- Fig. 1: in einer Seitenansicht ein zweispuriges Kraftfahrzeug mit teilweisem Aufriss, in dem die Lage des Kopfairbags gezeigt ist;
- Fig. 2: in einer vergrößerten Darstellung eine Anbindungsstelle des Kopfairbags an der Rohbaustruktur;
- Fig. 3 und 4: jeweils stark vergrößerte Schnittdarstellungen entlang der Schnittebenen A-A und B-B aus der Fig. 2;
- Fig. 5: in einer Ansicht entsprechend der Fig. 3 ein zweites Ausführungsbeispiel; und
- Fig. 6: die Airbag-Befestigungslasche in einer Abwicklung.

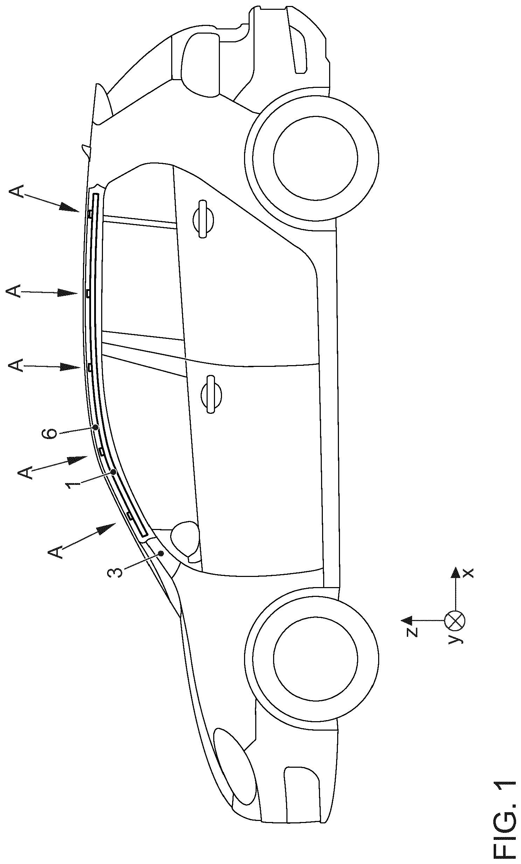

In der Fig. 1 ist ein Kopfairbagmodul in seiner Einbaulage gezeigt, in der sich der Airbag 1 ausgehend vom Bereich der A-Säule 3 bis über die B-Säule hinaus entlang eines Dachholms des Kraftfahrzeugs erstreckt. Das Kopfairbagmodul weist zudem einen nicht dargestellten Gasgenerator auf, der mit seiner Gasaustrittsöffnung über eine airbagseitige Gaseintrittsöffnung mit dem Kopfairbag 1 verbunden ist.

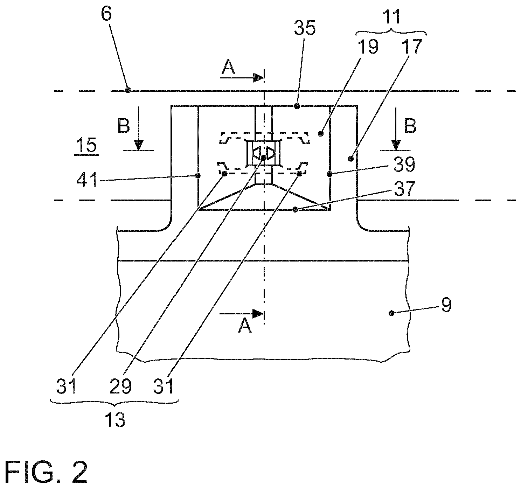

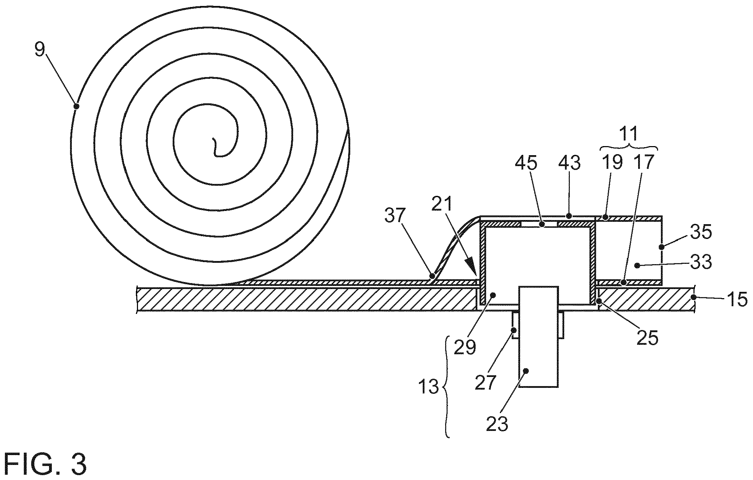

Der Airbag 1 ist, wie grob in der Fig. 3 angedeutet, im deaktivierten Zustand um eine sich in der Fahrzeuglängsrichtung x erstreckende Rollachse zu einer Airbagwicklung 9 zusammengerollt und an in der Fahrzeuglängsrichtung x voneinander beabstandeten Anbindungsstellen A (Fig. 1) am Dachholm 6 gehaltert. In den Fig. 2 bis 4 ist eine der Anbindungsstellen A veranschaulicht. Demzufolge ist die Airbagwicklung 9 mit einer Befestigungslasche 11 verlängert, die mittels eines Befestigungselementes 13 an einer Trägerwand 15 des Dachholms 6 befestigt ist. In den Fig. 2 bis 4 weist die Befestigungslasche 11 einen Zweilagenaufbau auf, und zwar bestehend aus einer Befestigungslage 17 und einer Schutzlage 19. In dem in den Fig. 2 bis 4 gezeigten Montagezustand ist die Befestigungslage 17 der Befestigungslasche 11 unmittelbar in Anlage mit der Trägerwand 15 und weist eine Durchführungsöffnung 21 auf, durch die ein Schaftteil 23 des Befestigungselementes 13 ragt. Das Schaftteil 23 ist weiter durch eine Montageöffnung 25 der Trägerwand 15 geführt und hintergreift deren Öffnungswandbereich mittels elastisch nachgiebiger Rastvorsprünge 27. Auf der gegenüber den Rastvorsprüngen 27 liegenden Seite weist das Befestigungselement 13 ein Kopfteil 29 auf, das mit seitlich abragenden, elastisch nachgiebigen Stützarmen 31 ausgebildet ist, die die Befestigungslage 17 gegen die Trägerwand 15 drücken.

Das in den Figuren gezeigte Befestigungselement 13 ist in gängiger Praxis als ein Blechumformteil ausgebildet, das in einem Biege- und/oder Stanzvorgang herstellbar ist. Entsprechend können die Schnittkanten des Kopfteils 29 des Befestigungselementes 13 Störkonturen bilden, die für den Werker beim Montagevorgang hinderlich sind. Um dies zu vermeiden, ist das Kopfteil 29 von der Schutzlage 19 überdeckt. Die Schutzlage 19 bildet zusammen mit der Befestigungslage 17 eine taschenförmige Kopfteil-Aufnahmekammer 33, die an ihrer, von der Airbagwicklung 9 abgewandten Randseite 35 offen ist. Die gegenüberliegende der Airbagwicklung 9 zugewandte Randseite 37 ist dagegen fest auf der Befestigungslage 17 angebunden. In gleicher Weise sind auch die beiden Schutzlagen-Randquerseiten 39, 41, die die beiden Randseiten 35, 37 verbinden, fest an der Befestigungslage 17 angebunden, wodurch die im Grundriss rechteckförmige Kopfteil-Aufnahmekammer 33 an drei Randseiten geschlossen ist und lediglich die Randseite 35 offen ist. Je nach Gegebenheiten können auch die beiden Querseiten (oder lediglich eine davon) lose auf der Befestigungslage 17 liegen oder nur teilweise an der Befestigungslage 17 angebunden sein.

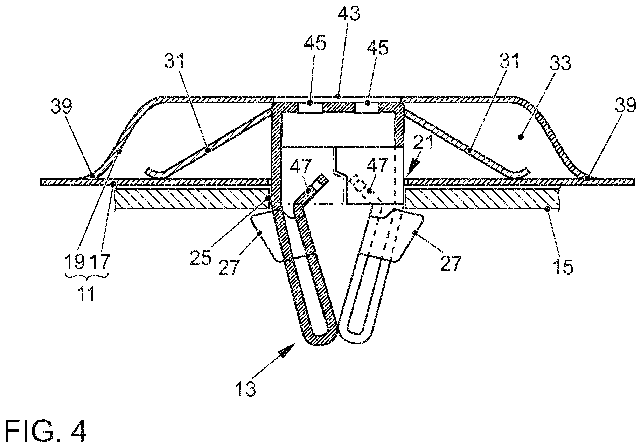

Wie aus den Figuren weiter hervorgeht, ist die Schutzlage 19 mit einer Zugriffsöffnung 43 ausgebildet, die einen direkten Werkzeugzugriff auf das Kopfteil 29 ermöglicht, um beispielhaft das Befestigungselement 13 zu demontieren. Die Zugriffsöffnung 43 in der Schutzlage 19 ist in etwa in Flucht mit kopfseitigen Werkzeugzugangsöffnungen 45 ausgebildet, durch die ein Werkzeugzugang zum Schaftteil 23 bereitgestellt ist, um die Rastvorsprünge 27 aus ihrer Eingriffsposition (Fig. 4) in eine Entnahmeposition zu verlagern. Hierzu sind an den Rastvorsprüngen 27 Betätigungsabschnitte 47 ausgebildet.

Der Airbag ist erfindungsgemäß in einem sogenannten Einstückwebverfahren (OPW) hergestellt. Beim OPW-Verfahren wird eine aus Kettfäden und Schussfäden gebildete Gewebestruktur erzeugt, deren obere Airbaggewebelage und untere Airbaggewebelage in einem gemeinsamen Webvorgang herstellbar sind, und zwar unter Bildung zwischengeordneter Hohlkammern. Der Schussfaden wird dabei alternierend in der oberen Airbaggewebelage und in der unteren Airbaggewebelage verwebt. Entsprechend ist die Fadendichte in der oberen Gewebelage (d.h. der Schutzlage 19) und in der unteren Gewebelage (das heißt der Befestigungslage 17) - im Vergleich zu einer Einzelgewebelage - halbiert, was gegebenenfalls die Gewebefestigkeit beeinflussen kann.

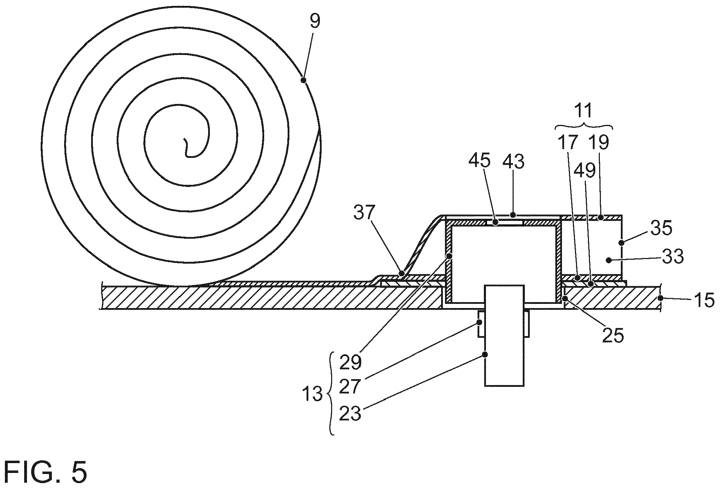

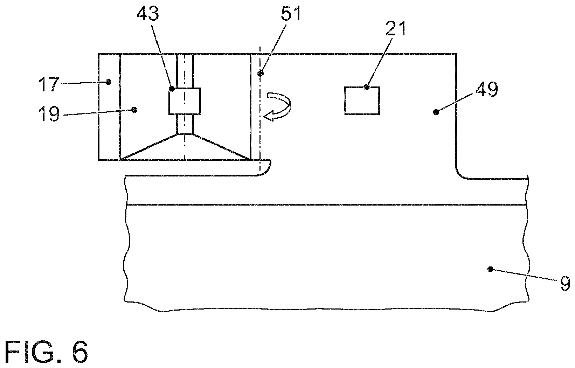

Um die Befestigungslage 17 zu verstärken, ist in den Fig. 4 und 5 zusätzlich eine Verstärkungslage 49 vorgesehen, die zusammen mit der Befestigungslage 17 zwischen der Trägerwand 15 und den elastischen Stützarmen 31 des Kopfteils 29 angeordnet sind. Sowohl die Befestigungslage 17 als auch die Verstärkungslage 49 weisen Durchführungsöffnungen 21 auf, die vom Schaftteil 23 des Befestigungselementes 13 durchsetzt sind. Die Schutzlage 19 ist nach wie vor als eine Einzelgewebelage ausgebildet. Entsprechend weist in der Fig. 5 und 6 die Befestigungslasche 11 einen Dreilagenaufbau auf, und zwar mit der Verstärkungslage 49, der Befestigungslage 17 und der Schutzlage 19.

Die Verstärkungslage 49 und die Befestigungslage 17 gehen materialeinheitlich und einstückig an einer in der Fig. 6 gezeigten Faltkante 51 ineinander über. In dem in der Fig. 5 gezeigten Montagezustand sind die Befestigungslage 17 und die Verstärkungslage 49 um die Faltkante 51 um 180° auf Umschlag in flächiger Anlage übereinander gelegt. Demgegenüber ist in der Fig. 6 ein Abwicklungszustand gezeigt, bei dem die Befestigungslage 17 mit darauf applizierter Schutzlage 19 und die Verstärkungslage 49 an der Faltkante 51 auseinandergeklappt sind.

## Patentansprüche

1. Befestigungsanordnung zur Befestigung eines Airbags (1) an einer Trägerwand (15) eines Fahrzeugs, mit einem Befestigungselement (13), das ein Kopfteil (29) und ein Schaftteil (23) aufweist, das im Montagezustand eine Befestigungslasche (11) des Airbags (1) und eine Montageöffnung (25) der Trägerwand (15) durchsetzt und einen Öffnungsrandbereich der Montageöffnung (25) hintergreift, wobei im Montagezustand das Kopfteil (29) des Befestigungselements (13) vom Airbag (1) überdeckt ist, wobei die Befestigungslasche (11) des Airbags (1) mit einem zumindest zweilagigen Mehrlagenaufbau ausgebildet ist, der zumindest eine Befestigungslage (17), die von dem an der Trägerwand (15) montierbaren Schaftteil (23) des Befestigungselements (13) durchsetzt ist, und eine Schutzlage (19) aufweist, die das Kopfteil (29) des Befestigungselements (13) überdeckt, **dadurch gekennzeichnet, dass** der im Montagezustand aufgewickelte Airbag (1) materialeinheitlich und/oder einstückig mit der Befestigungslage (17) der zumindest zweilagigen Befestigungslasche (11) verlängert ist, dass die Schutzlage (19) an ihrer dem aufgewickelten Airbag (1) zugewandten Randseite (37) fest an der Befestigungslage (17) angebunden ist, dass die Schutzlage (19) an ihrer dem aufgewickelten Airbag (1) abgewandten Randseite (35) gegenüber der Befestigungslage (17) anbindungsfrei ist, und dass die Schutzlage (19) an ihren, die beiden Randseiten (35, 37) der Schutzlage (19) verbindenden Querseiten (39, 41) fest an der Befestigungslage (17) angebunden sind, und zwar unter Bildung einer taschenförmigen Kopfteil-Aufnahme (33), die an ihrer vom Airbag (1) abgewandten Randseite (35) offen ist.

2. Befestigungsanordnung nach Anspruch 1, **dadurch gekennzeichnet, dass** die das Kopfteil (29) des Befestigungselements (13) überdeckende Schutzlage (19) mit einer Zugriffsöffnung (43) ausgebildet ist, die einen direkten Werkzeugzugriff auf das Kopfteil (29) ermöglicht.

3. Befestigungsanordnung nach Anspruch 2, **dadurch gekennzeichnet, dass** das Kopfteil (29) des Befestigungselements (13) zumindest eine Werkzeugzugangsöffnung (45) aufweist, die einen Werkzeug-Zugang zum Schaftteil (23) bereitstellt zur Demontage des Befestigungselements (13) von der Trägerwand (15).

4. Befestigungsanordnung nach Anspruch 3, **dadurch gekennzeichnet, dass** die kopfseitige Werkzeugzugangsöffnung (45) und die Zugriffsöffnung (43) der Befestigungslage (17) in Flucht zueinander ausgerichtet sind.

5. Befestigungsanordnung nach Anspruch 1, **dadurch gekennzeichnet, dass** die Schutzlage (19) eine Einzellage ist.

6. Befestigungsanordnung nach Anspruch 5, **dadurch gekennzeichnet, dass** der Befestigungslage (17) eine Verstärkungslage (49) zugeordnet ist, die zusammen mit der Befestigungslage (17) zwischen der Trägerwand (15) und dem Kopfteil (29) des Befestigungselements (13) angeordnet sind, und dass sowohl die Befestigungslage (17) als auch die Verstärkungslage (49) vom Schaftteil (23) des Befestigungselements (13) durchsetzt sind.

7. Befestigungsanordnung nach Anspruch 6, **dadurch gekennzeichnet, dass** die Verstärkungslage (49) und die Befestigungslage (17) materialeinheitlich und/oder einstückig an einer Faltkante (51) ineinander übergehen, und dass im Montagezustand die Befestigungslage (17) und die Verstärkungslage (49) um die Faltkante (51) auf Umschlag in flächiger Anlage übereinandergelegt sind.

8. Befestigungsanordnung nach Anspruch 1, **dadurch gekennzeichnet, dass** der Airbag mit einer aus Kettfäden und Schussfäden gebildeten Gewebestruktur in einem Einstückwebverfahren hergestellt ist, bei dem in einem gemeinsamen Webvorgang obere und untere Airbaggewebelagen hergestellt werden unter Bildung zwischengeordneter Hohlkammern, wobei der Schussfaden alternierend in der oberen und in der unteren Airbaggewebelage verwebt wird.

9. Befestigungsanordnung nach Anspruch 8, **dadurch gekennzeichnet, dass** in dem Einstückwebverfahren jeder zweite Faden gewechselt wird, so dass die Fadendichte in der oberen Airbaggewebelage und in der unteren Airbaggewebelage im Vergleich zu einer Einzelgewebelage halbiert ist.

10. Befestigungsanordnung nach Anspruch 8, **dadurch gekennzeichnet, dass** in dem Einstückwebverfahren nur jeder dritte Faden gewechselt wird, so dass einerseits eine Gewebelage mit einer 2/3-Fadendichte und andererseits eine Gewebelage mit einer 1/3-Fadendichte erzeugt wird.

## Claims

1. Fastening arrangement for fastening an airbag (1) to a support wall (15) of a vehicle, having a fastening element (13) which has a head part (29) and a shank part (23) which in the assembled state penetrates a fastening lug (11) of the airbag (1) and an assembly opening (25) of the support wall (15) and engages behind a peripheral opening region of the assembly opening (25), wherein the head part (29) of the fastening element (13) in the assembled state is covered by the airbag (1), wherein the fastening lug (11) of the airbag (1) is configured having an at least twin-tiered multi-tiered construction which has at least one fastening tier (17) which is penetrated by the shank part (23) of the fastening element (13) that is capable of being assembled on the support wall (15), and a protective tier (19) which covers the head part (29) of the fastening element (13), **characterized in that** the airbag (1) that in the assembled state is rolled up in terms of length is extended in a manner so as to be materially integral and/or integral with the fastening tier (17) of the at least twin-tiered fastening lug (11), **in that** the protective tier (19) on that peripheral side (37) thereof that faces the rolled-up airbag (1) is fixedly attached to the fastening tier (17), **in that** the protective tier (19) on that peripheral side (35) thereof that faces away from the rolled-up airbag (1) is free of any attachment in relation to the fastening tier (17), and **in that** the protective tier (19) on those transverse sides (39, 31) thereof that connect the two peripheral sides (35, 37) of the protective tier (19) is fixedly attached to the fastening tier (17), specifically while forming a pocket-shaped head-part receptacle (33) which is open on that peripheral side (35) thereof that faces away from the airbag (1).

2. Fastening arrangement according to Claim 1, **characterized in that** the protective tier (19) that covers the head part (29) of the fastening element (13) is configured having an access opening (43) which enables direct access for tools to engage on the head part (29).

3. Fastening arrangement according to Claim 2, **characterized in that** the head part (29) of the fastening element (13) has at least one tool access opening (45) which provides an access for tools to the shank part (23) in order for the fastening element (13) to be disassembled from the support wall (15).

4. Fastening arrangement according to Claim 3, **characterized in that** the tool access opening (45) on the head and the access opening (43) of the fastening tier (17) are mutually aligned.

5. Fastening arrangement according to Claim 1, **characterized in that** the protective tier (19) is a single tier.

6. Fastening arrangement according to Claim 5, **characterized in that** the fastening tier (17) is assigned a reinforcement tier (49) which conjointly with the fastening tier (17) is disposed between the support wall (15) and the head part (29) of the fastening element (13), and **in that** both the fastening tier (17) and the reinforcement tier (49) are penetrated by the shank part (23) of the fastening element (13).

7. Fastening arrangement according to Claim 6, **characterized in that** the reinforcement tier (49) and the fastening tier (17) mutually transition in a materially integral and/or integral manner on a folding edge (51), and **in that** the fastening tier (17) and the reinforcement tier (49) in the assembled state are folded over about the folding edge (51) so as to bear on one another in a planar manner.

8. Fastening arrangement according to Claim 1, **characterized in that** the airbag is produced in an integral weaving method by way of a woven fabric structure formed by warp threads and weft threads, in which integral weaving method upper and lower airbag woven fabric tiers are produced in a common weaving procedure while forming interposed cavities, wherein the weft thread in an alternating manner is interwoven in the upper and in the lower airbag woven fabric tier.

9. Fastening arrangement according to Claim 8, **characterized in that** each second thread is alternated in the integral weaving method such that the thread density in the upper airbag woven fabric tier and in the lower airbag woven fabric tier is reduced by half as compared to a single woven fabric tier.

10. Fastening arrangement according to Claim 8, **characterized in that** only each third thread is alternated in the integral weaving method such that a woven fabric tier having a 2/3 thread density is generated on the one hand, and a woven fabric tier having a 1/3 thread density is generated on the other hand.

## Revendications

1. Agencement de fixation pour la fixation d'un airbag (1) sur une paroi de support (15) d'un véhicule, comprenant un élément de fixation (13) qui présente une partie de tête (29) et une partie de tige (23), qui, dans l'état de montage, traverse une patte de fixation (11) de l'airbag (1) et une ouverture de montage (25) de la paroi de support (15) et vient en prise par l'arrière avec une région de bord d'ouverture de l'ouverture de montage (25), la partie de tête (29) de l'élément de fixation (13), dans l'état de montage, étant recouverte par l'airbag (1), la patte de fixation (11) de l'airbag (1) étant réalisée avec une structure multicouche ayant au moins deux couches, qui présente au moins une couche de fixation (17) qui est traversée par la partie de tige (23) de l'élément de fixation (13), pouvant être montée sur la paroi de support (15), et une couche de protection (19) qui recouvre la partie de tête (29) de l'élément de fixation (13), **caractérisé en ce que** l'airbag (1) enroulé dans l'état de montage est prolongé dans le même matériau et/ou d'une seule pièce par la couche de fixation (17) de la patte de fixation (11) ayant au moins deux couches, **en ce que** la couche de protection (19) est reliée fixement à la couche de fixation (17) au niveau de son côté de bord (37) tourné vers l'airbag enroulé (1), **en ce que** la couche de protection (19), au niveau de son côté de bord (35) opposé à l'airbag enroulé (1), n'est pas connectée à la couche de fixation (17), et **en ce que** la couche de protection (19), au niveau de ses côtés transversaux (39, 41) reliant les deux côtés de bords (35, 37) de la couche de protection (19), est reliée fixement à la couche de fixation (17), et ce en formant un logement de partie de tête en forme de poche (33) qui est ouvert au niveau de son côté de bord (35) détourné de l'airbag (1).

2. Agencement de fixation selon la revendication 1, **caractérisé en ce que** la couche de protection (19) recouvrant la partie de tête (29) de l'élément de fixation (13) est réalisée avec une ouverture d'engagement (43) qui permet un engagement direct d'un outil avec la partie de tête (29).

3. Agencement de fixation selon la revendication 2, **caractérisé en ce que** la partie de tête (29) de l'élément de fixation (13) présente au moins une ouverture d'accès (45) pour un outil qui fournit un accès à la partie de tige (23) pour un outil, pour le démontage de l'élément de fixation (13) de la paroi de support (15).

4. Agencement de fixation selon la revendication 3, **caractérisé en ce que** l'ouverture d'accès (45) du côté de la tête pour un outil et l'ouverture d'engagement (43) de la patte de fixation (17) sont orientées en alignement l'une avec l'autre.

5. Agencement de fixation selon la revendication 1, **caractérisé en ce que** la couche de protection (19) est une couche unique.

6. Agencement de fixation selon la revendication 5, **caractérisé en ce que** la couche de fixation (17) est associée à une couche de renforcement (49) qui, conjointement avec la couche de fixation (17), est disposée entre la paroi de support (15) et la partie de tête (29) de l'élément de fixation 13), et **en ce que** la couche de fixation (17) ainsi que la couche de renforcement (49) sont traversées par la partie de tige (23) de l'élément de fixation (13).

7. Agencement de fixation selon la revendication 6, **caractérisé en ce que** la couche de renforcement (49) et la couche de fixation (17) se prolongent l'une dans l'autre dans le même matériau et/ou d'une seule pièce au niveau d'une arête de pliage (51) et **en ce que** dans l'état de montage, la couche de fixation (17) et la couche de renforcement (49) sont superposées de manière appliquée à plat sous forme repliée autour de l'arête de pliage (51).

8. Agencement de fixation selon la revendication 1, **caractérisé en ce que** l'airbag est fabriqué avec une structure de tissu formée de fils de chaîne et de fils de trame dans un procédé de tissage d'une seule pièce, dans lequel, dans une opération de tissage commune, des couches de tissu d'airbag supérieure et inférieure sont fabriquées en formant des chambres creuses intermédiaires, les fils de trame étant tissés en alternance dans la couche de tissu d'airbag supérieure et inférieure.

9. Agencement de fixation selon la revendication 8, **caractérisé en ce que** dans le procédé de tissage d'une seule pièce, un fil sur deux est alterné, de telle sorte que la densité des fils dans la couche de tissu d'airbag supérieure et dans la couche de tissu d'airbag inférieure soit réduite de moitié par rapport à une couche de tissu unique.

10. Agencement de fixation selon la revendication 8, **caractérisé en ce que** dans le procédé de tissage d'une seule pièce, seulement un fil sur trois est alterné de telle sorte que l'on obtienne d'une part une couche de tissu ayant une densité de fils correspondant à 2/3 et d'autre part une couche de tissu ayant une densité de fils correspondant à 1/3.
